# FASCICULE DE BREVET EUROPEEN

(11) **EP 0 672 106 B1**
(45) Date de publication et mention de la délivrance du brevet: **04.11.1998**
(21) Numéro de dépôt: 93912477.2
(22) Date de dépôt: 17.06.1993
(51) Int. Cl.: C12C 7/00

(54) **PROCEDE DE BRASSAGE AMELIORE**
VERBESSERTE BRAUMETHODE
IMPROVED BREWING METHOD

(30) Priorité: 18.06.1992 BE 9200572
(43) Date de publication de la demande: 20.09.1995
(73) Titulaire: INTERBREW SOCIETE ANONYME, B-1000 Bruxelles (BE); KRONTEC S.A., L-1112 Luxembourg (LU)
(72) Inventeur: DUPIRE, Stéphane, B-1350 Orp-le-Grand (BE); HERMIA, Jacques, B-1457 Walhain (BE); MACRON, Jean-Yves, B-1348 Louvain-la-Neuve (BE); MEURENS, Jacques, B-4546 Richelle-Vise (BE); RAHIER, Georges, B-4000 Liège (BE)
(74) Mandataire: Keib, Gérard
(86) Numéro de dépôt international: BE9300035
(87) Numéro de publication internationale: WO9325656

(56) Documents cités:
- BE-A- 457 667
- CH-C- 457 334
- DE-A- 1 642 743
- DE-A- 2 941 698
- DE-A- 3 344 716
- DE-C- 657 114
- GB-A- 1 321 009
- US-A- 3 048 489
- US-A- 3 161 522

## Description

### Objet de l'invention

La présente invention porte sur un procédé de brassage amélioré permettant notamment d'importants gains de temps dans la production du moût. Elle s'étend également aux installations de salles de brassage permettant la mise oeuvre de ce procédé.

### Etat de la technique

Dans le procédé brassicole, la salle de brassage a pour but de produire à partir d'eau, de céréales maltées ou non et de houblon, un moût devant être fermenté.

Cette étape du procédé est discontinue et est basée sur les cinq opérations successives suivantes :
1° Saccharification: durant cette phase, les matières amylacées présentes dans les céréales sont transformées par voie enzymatique en éléments fermentescibles. Concomitamment, des protéines sont dégradées en peptides et acides aminés.
2° Filtration: la suspension obtenue est ensuite filtrée. La phase insoluble, appelée drêche, est lavée et éventuellement comprimée pour en retirer le maximum d'extrait possible. La phase liquide, appelée moût, est portée à ébullition
3° Ebullition: l'ébullition du moût a pour but d'inactiver les enzymes, de stériliser le moût, de coaguler les protéines, d'éliminer l'eau excédentaire et les volatils indésirables et de libérer les matières amères présentes dans le houblon additionné à cette étape du procédé.
4° Clarification du moût: après ébullition, le moût est chargé de coagulats de protéines et de drêche de houblon. Dans le procédé brassicole, il est nécessaire d'éliminer cette phase insoluble appelée trub. Cette séparation se réalise assez aisément par décantation statique ou à effet centripète (Whirlpool).
5° Refroidissement: le moût bouilli est ensuite refroidi jusqu'à la température de fermentation. Au cours du refroidissement des fractions protéiques s'associent aux polyphénols pour donner naissance à un précipité fin qui n'est pas néfaste pour la bière.

Pour réaliser ces opérations, la salle de brassage est équipée d'une chaudière à trempe pour empeser les céréales non maltées telles que le riz ou le maïs, d'une ou deux cuves d'empâtage pour les céréales maltées, d'un système de filtration, d'une ou deux cuves d'ébullition, d'un système de séparation du trub et d'un refroidisseur.

De manière générale, cette conception de la salle brassage n'utilise pas de manière optimale les équipements existants et ne permet pas facilement de modifier les types d'opérations effectuées.

Les cadences de production sont limitées en particulier du fait d'une utilisation des cuves de brassage qui n'est pas optimale. Les coûts d'investissements et de fonctionnement des installations ainsi que la régulation et l'automatisation de la salle gagneraient à être optimalisées.

Selon l'état de la technique, diverses propositions ont été faites pour porter remède à ces inconvénients.

Le document GB-A-1 321 009 décrit un procédé de production continu de moût qui implique une modification complète des salles de brassage existantes et qui ne s'est jamais imposée dans la production industrielle de la bière.

Dans le document DE-A-2 941 698, on décrit un procédé visant à réduire la durée du processus de brassage reposant sur une classification par cyclone faisant suite à la mouture des céréales, en vue de séparer d'une part une fraction riche en amidon et d'autre part une fraction riche en protéines et pauvre en amidon. Seule la fraction riche en amidon est utilisée pour la brasserie, l'autre fraction étant utilisée pour un autre usage. Cette étape préalable exige du temps, consomme de l'énergie et n'implique pas une valorisation complète des matières pour la brasserie.

Le document US-A-3 048 489 vise à réduire la durée des opérations de brassage et décrit un procédé comportant une étape de filtration après l'ébullition du moût en utilisant une seule cuve de réaction.

On indique dans le document que le malt doit être broyé très finement jusqu'à une valeur de 60 mesh au moins et de préférence de 100 mesh.

### Buts visés par l'invention

L'invention vise à éviter les inconvénients précités des installations connues en offrant plus de flexibilité de fonctionnement et d'utilisation. Elle permet en particulier de produire plusieurs types de bières (par exemple, de préparer un moût destiné à une fermentation haute et un autre moût destiné à une fermentation basse) et de manière générale, grâce à une meilleure utilisation des équipements, de réduire les coûts et de faciliter l'exploitation.

### Eléments caractéristiques principaux de l'invention

Selon l'invention, la suspension provenant de céréales ayant subi une saccharification de manière classique est soumise à une ébullition dans la cuve même dans laquelle se réalise l'empâtage, ceci en l'absence de houblon, après quoi le métier (suspension) obtenu est pompé sur un filtre.

Selon l'invention cependant, la filtration s'effectue sur couche mince d'une épaisseur comprise entre 20 et 100 mm, de préférence de l'ordre de 40 mm, contrairement aux systèmes traditionnels fonctionnant à des épaisseur de l'ordre de 30 cm. Il en résulte l'avantage que la durée de la filtration est nettement plus courte conformément aux lois de fonctionnement de l'opération et ce tout en obtenant un moût de clarté adéquat.

Après filtration, la drêche est lavée, après avoir été préalablement comprimée et le moût, éventuellement après passage dans un réservoir tampon, est refroidi pour un traitement ultérieur classique.

Du fait que le houblon n'est pas ajouté au cours de l'opération d'empâtage-ébullition, celui-ci est introduit sous la forme isomérisée, soit en fermentation, soit au cours de la garde de la bière.

Des huiles de houblon peuvent être ajoutées également en canetterie.

Les céréales mises en oeuvre n'ont pas subi de séparation en plusieurs fractions et sont mises en suspension sous forme d'une farine dont une partie non négligeable de l'ordre de 30 à 40% est d'une taille ne leur permettant pas de passer au travers des tamis de 253 µm suivant les normes communément admises dans le secteur brassicole.

Cette valeur correspond à celle que l'on peut obtenir à l'aide d'un broyeur à marteaux avec une ouverture de sortie d'un diamètre d'ouverture de tamis de l'ordre du millimètre.

Il est apparu avantageux d'inclure dans le procédé une étape intermédiaire entre l'ébullition et la filtration consistant en un refroidissement à une température de l'ordre de 70°C, ceci soit par addition d'eau froide au métier, soit par passage dans un échangeur de chaleur. L'intérêt de cette opération est de limiter la teneur en DMS (diméthylsulfoxyde) et en dextrine à l'entonnement.

D'autres caractéristiques et avantages de l'invention apparaîtront de la description qui suit d'un mode d'exécution préférentiel de celle-ci.

### Brève description des figures annexées

La figure 1 représente le schéma d'une salle de brassage classique.

La figure 2 représente sous forme d'un diagramme-bloc la conception d'une installation convenant pour la mise en pratique du procédé de l'invention.

### Description d'un mode d'exécution préféré de l'invention

L'invention sera décrite plus en détail en référence à un mode d'exécution préféré de l'invention décrit dans les figures. Différents détails opératoires et caractéristiques propres de la technique de l'invention y seront décrits à titre d'illustration essentiellement et sans caractère limitatif.

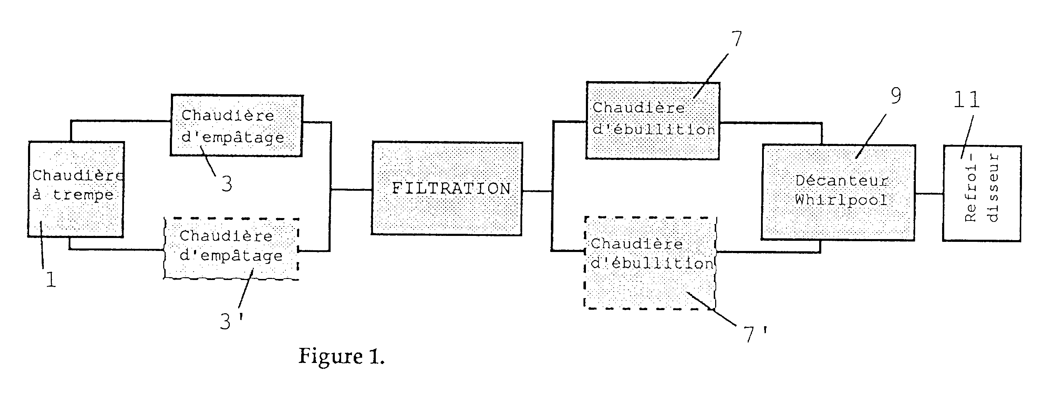

Dans la figure 1, selon l'état de la technique, la cuve à trempe 1 sert à empeser les céréales non maltées. La matière est transférée ensuite vers une ou deux cuves d'empâtage 3 et 3' pour les céréales maltées. Après passage dans un système de filtration 5, l'ébullition est réalisée dans une ou deux cuves d'ébullition 7 et 7'. Après passage dans le système de séparation du trub 9 (par exemple dans un décanteur ou un Whirlpool), le moût est amené à la température de fermentation dans un refroidisseur 11.

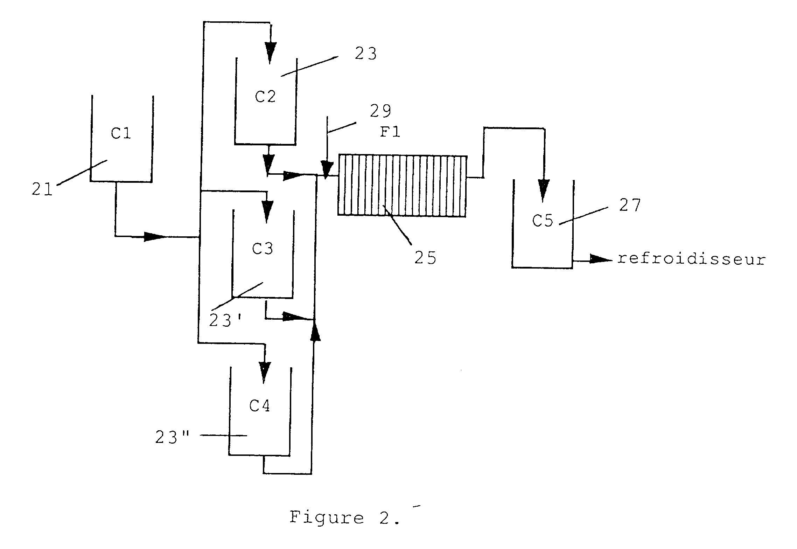

Le schéma d'installation de l'invention est représenté à la figure 2. Il comporte une cuve à maische 21 et au moins une et de préférence deux ou trois cuves 23, 23', 23" dans lesquelles se réalisent alors l'empâtage et l'ébullition. Ces cuves sont suivies d'un filtre 25 et de préférence d'un réservoir-tampon (non représenté) et ensuite d'un refroidisseur 27.

Conformément aux caractéristiques de l'invention, la filtration est réalisée sur couche mince d'une épaisseur de l'ordre de 40 mm.

Le filtre est constitué de préférence comme indiqué dans le document EP-A-0 207 555.

Les matières céréales alimentées à la cuve à maische 21 sont obtenues au départ du broyage de petites quantités de malt d'orge additionnées de grains crus dont la température d'empesage de l'amidon est trop élevée pour pouvoir être transformée par les enzymes du malt d'orge ou d'une suspension de farine de malt qui doit être élevée à l'ébullition pour donner à la bière le goût adéquat, provenant notamment d'un broyeur à marteaux à ouverture de tamis de l'ordre du millimètre.

Préalablement au passage sur le filtre 25, il peut être avantageux en vue de diminuer la teneur en dextrine et en DMS , de procéder à un refroidissement à une température de l'ordre de 70°C. Ceci est indiqué par une flèche portant le repère de référence 29 dans la figure 2.

Bien entendu, la capacité des cuves d'empâtage-ébullition est adaptée aux conditions d'opérations. Il est bien entendu que également l'utilisation de plusieurs cuves de ce type au lieu d'une seule se traduit par une réduction de capacité individuelle de chaque cuve par rapport à la capacité prévue pour une seule cuve.

On accorde la préférence à un schéma tel que représenté comportant trois cuves d'empâtage-ébullition à cause de la plus grande souplesse d'utilisation, en particulier pour produire plusieurs types de bières.

La conception même de l'installation permet de mieux utiliser les cuves de brassage et des accroissements de l'ordre de 20 à 30% des cadences de production sont réalisables.

Il convient de noter que certains ratios de composés naturels du moût issus du nouveau procédé peuvent être différents de ceux obtenus avec le procédé traditionnel.

On pourrait imaginer que le procédé de l'invention fasse l'objet de certaines objections ou de préjugés. La plupart de ces objections imposent des contraintes peu importantes dans la conduite des opérations et d'autres se sont révélées totalement sans fondement.

Différents détails opératoires seront examinés en détail ci-après à cet égard.
Empesage de l'amidon: lors de l'ébullition, l'amidon peut s'empeser, pouvant provoquer des difficultés lors de la clarification finale de la bière. Ce phénomène est sensiblement atténué par une durée d'ébullition plus courte et par l'utilisation de fines moutures à l'empâtage. Ces fines moutures peuvent aisément être produites par un broyeur à marteaux.
Elimination des volatils indésirables: de par la concentration en extrait plus élevée des moûts à l'ébullition, l'élimination des volatils est plus aisée. Bien qu'à la fin de l'ébullition la teneur de ces éléments soit plus importante, la dilution causée par les eaux de lavage de la drêche provoque une diminution sensible de la concentration en éléments indésirables. En ce qui concerne le diméthylsulfure son élimination peut être réalisée par un effet de stripping lors de l'écoulement du moût dans la cuve tampon ou par l'utilisation dans une cuve de saccharification-ébullition d'un mobile d'agitation adéquat à effet de pompage élevé. Goût inadéquat: les pailles des céréales portées à ébullition pourraient libérer dans le moût des substances inadéquates. Les tests de dégustation ont démontré qu'aucun faux goût n'apparaissait.
Filtration difficile: la précipitation des protéines provoque une augmentation de l'oberteig rendant ainsi la filtration sur cuve-filtre, appareil de référence en brasserie, quasi impossible. La réalisation d'une filtration sur couche mince d'un brassin confectionné avec une fine mouture et ce avec
un appareil de filtrage adéquat, ne pose aucune difficulté.
Houblonnage: pour éviter une perte de rendement d'isomérisation importante en cuve d'ébullition due à des phénomènes d'adsorption sur le trub et les pailles, l'amertume est conférée à la bière par l'ajout d'extraits préisomérisés durant la fermentation ou durant la garde et pour donner des flaveurs particulières à la bière, il est possible d'ajouter des huiles de houblon avant la clarification de la bière ou à la canetterie.

### Résultats expérimentaux

Les temps de production du moût prêt à l'entonnement ont été comparés, pour une bière type "Pils"; un temps de 360 minutes a été mesuré pour le procédé classique, à savoir 120 minutes pour la saccharification, 90 minutes pour la filtration, 90 minutes pour l'ébullition et 60 minutes pour le traitement du moût. Pour le nouveau procédé, la durée est ramenée à 270 minutes, à savoir 120 minutes pour la saccharification, 60 minutes pour l'ébullition et 90 minutes pour la filtration, soit un gain de plus de 20% par rapport au procédé traditionnel.

La qualité du moût avant fermentation est conforme aux normes admises pour la bière Pils de référence (100 % malt). Le tableau 1 reprend les résultats obtenus.

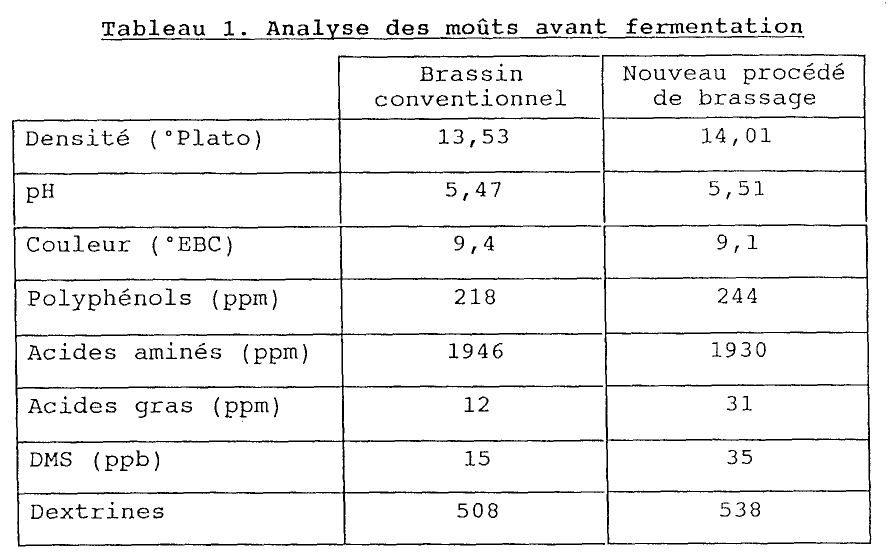

Les moûts mis en fermentation produisirent des bières fort similaires. Le tableau 2 reprend les valeurs des analyses réalisées.

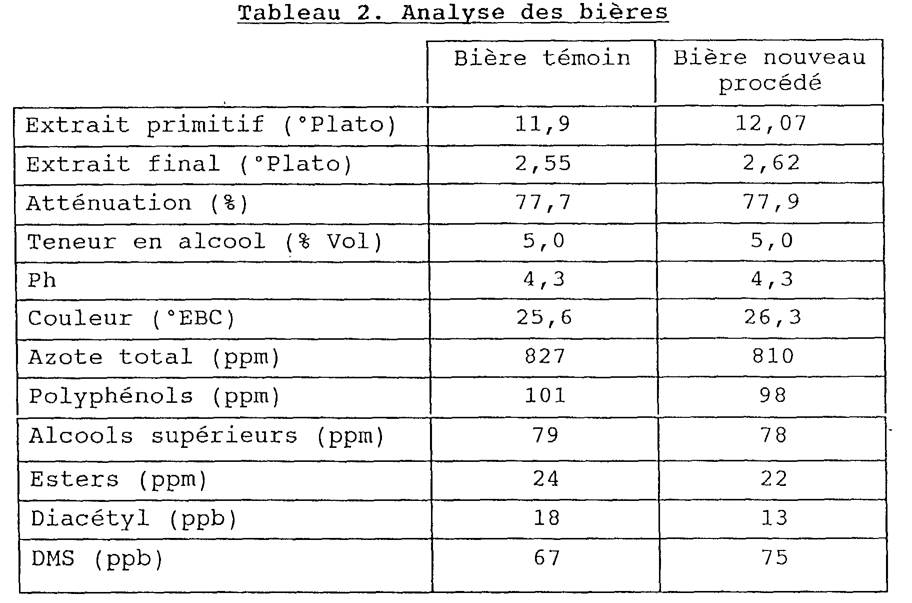

Afin de mettre en évidence l'intérêt des conditions opératoires spécifiques à la technique de l'invention, on a comparé l'effet des valeurs de mouture des farines sur la durée totale de filtration-lavage pour des épaisseurs de lit de filtration de 40 mm.

Les échelles comparatives selon le système de mesure peuvent être schématisées comme suit:
1. Comparaison mesures "Plansichter" et ouverture d'un broyeur à marteaux

| PLANSICHTER | OUVERTURE |
|---|---|
| Tamis 1 | 1,24 mm |
| 2 | 1,01 |
| 3 | 0,547 |
| 4 | 0,253 |
| 5 | 0,152 |

2. Echelles "Mesh" et "microns"

| | |
|---|---|
| 60 mesh | 250 µm |
| 100 mesh | 150 µm |

La distribution expérimentale en pourcentage en poids selon la mesure Plansichter pour respectivement des ouvertures de ⌀ 2 et ⌀ 0,8 est comme suit:

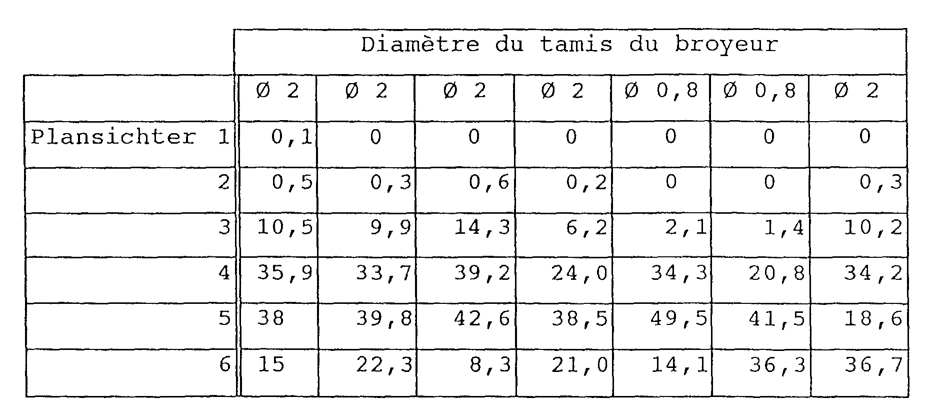

On a comparé une mouture ⌀ 0,5 et une mouture ⌀ 2 correspondant à la distribution suivante:

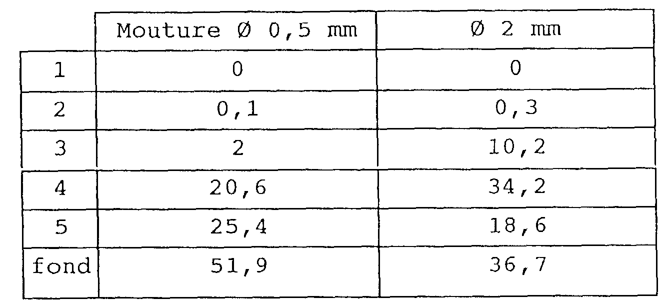

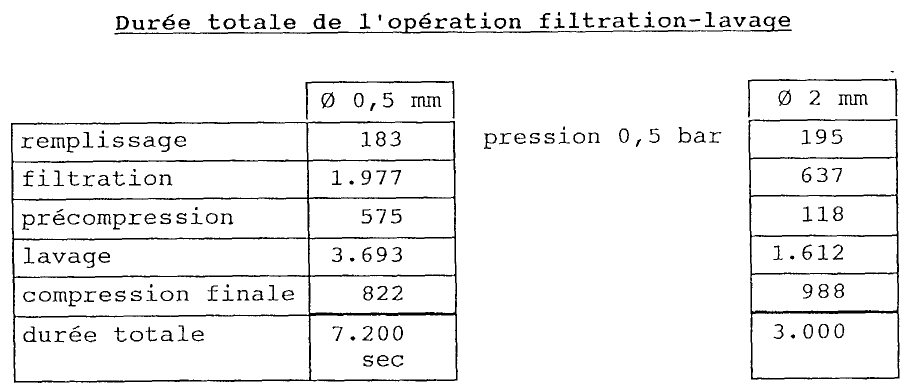

## Revendications

1. Procédé pour produire un moût bouilli, ce procédé comprenant les étapes qui consistent à :
- broyer des céréales à une granulométrie prédéterminée sans séparation en plusieurs fractions et mettre ces céréales en suspension dans de l'eau ;
- provoquer une saccharification des céréales dans cette suspension ;
- amener cette suspension à ébullition ;
- filtrer cette suspension après ébullition ;
caractérisé en ce que l'on utilise des céréales maltées ou non maltées, et en ce que l'on broie ces céréales de façon à obtenir une farine dont au moins 30 à 40% constitue une fraction supérieure à 253 µm.

2. Procédé selon la revendication 1, caractérisé en ce que la filtration est réalisée sur couche mince d'une épaisseur comprise entre 20 et 100 mm, de préférence de l'ordre de 40 mm.

3. Procédé selon la revendication 1 ou 2, caractérisé en ce que le houblon est introduit sous la forme isomérisée en fermentation ou durant la garde.

4. Procédé selon l'une des revendications 1 à 3, caractérisé en ce qu'il comporte une étape intermédiaire entre l'ébullition et la filtration consistant en un refroidissement à une température de l'ordre de 70°C.

5. Procédé selon la revendication 4, caractérisé en ce que le refroidissement de l'étape intermédiaire est réalisé par addition d'eau froide au métier.

6. Procédé selon la revendication 4, caractérisé en ce que le refroidissement de l'étape intermédiaire est réalisé par passage dans un échangeur de chaleur.

7. Procédé selon l'une quelconque des revendications 1 à 6, caractérisé en ce que des huiles de houblon sont ajoutées en canetterie ou éventuellement avant la clarification finale de la bière.

8. Procédé selon l'une quelconque des revendication 1 à 7, caractérisé en ce que des fines moutures sont utilisées à l'empâtage de façon à raccourcir la durée de l'ébullition.

9. Procédé selon l'une quelconque des revendications 1 à 8, caractérisé en ce que le diméthylsulfure est éliminé par un effet de stripping lors de l'écoulement du moût dans un réservoir tampon ou par l'utilisation d'un mobile d'agitation adéquat à effet de pompage élevé dans la cuve de saccharification-ébullition.

## Patentansprüche

1. Verfahren zur Herstellung einer gekochten Bierwürze, wobei das Verfahren Schritte aufweist, die daraus bestehen:
- Getreide auf eine vorbestimmte Korngröße zu mahlen ohne Trennung in mehrere Fraktionen und die Getreide in Wasser in Suspension zu bringen;
- eine Verzuckerung der Getreide in der Suspension auszulösen;
- die Suspension zum Sieden zu bringen;
- die Suspension nach dem Sieden zu filtrieren;
dadurch gekennzeichnet, daß gemalzene oder nicht gemalzene Getreide verwendet werden, und daß die Getreide derart gemahlen werden, daß man ein Mehl erhält, von dem wenigstens 30 bis 40% eine größere Fraktion als 253 µm bilden.

2. Verfahren gemäß Anspruch 1, dadurch gekennzeichnet, daß die Filtration auf einer dünnen Schicht mit einer Dicke zwischen 20 und 100 mm, vorzugsweise in der Größenordnung von 40 mm, durchgeführt wird.

3. Verfahren gemäß Anspruch 1 oder 2, dadurch gekennzeichnet, daß der Hopfen in isomerisierter Form bei der Gärung oder während des Absetzenlassens zugegeben wird.

4. Verfahren gemäß einem der Ansprüche 1 bis 3, dadurch gekennzeichnet, daß es einen Zwischenschritt zwischen dem Sieden und der Filtration aufweist, der aus einem Abkühlen auf eine Temperatur in der Größenordnung von 70°C besteht.

5. Verfahren gemäß Anspruch 4, dadurch gekenneichnet, daß das Abkühlen des Zwischenschrittes durch Zugabe von kaltem Wasser zu dem Gemisch durchgeführt wird.

6. Verfahren gemäß Anspruch 4, dadurch gekennzeichnet, daß das Abkühlen des Zwischenschrittes mittels Durchlaufs durch einen Wärmetauscher durchgeführt wird.

7. Verfahren gemäß irgendeinem der Ansprüche 1 bis 6, dadurch gekennzeichnet, daß Hopfenöle bei der Abfüllung oder eventuell vor der Endklärung des Bieres zugesetzt werden.

8. Verfahren gemäß irgendeinem der Ansprüche 1 bis 7, dadurch gekennzeichnet, daß feines Mahlgut zum Maischen verwendet wird, so daß die Dauer des Siedens verkürzt wird.

9. Verfahren gemäß irgendeinem der Ansprüche 1 bis 8, dadurch gekennzeichnet, daß das Dimethylsulfid durch einen Strippeffekt während des Ablaufens der Bierwürze in einen Pufferbehälter oder durch Verwendung eines Rührantriebs, der einer erhöhten Pumpwirkung in dem Faß der Verzuckerung und des Siedens entspricht, eliminiert wird.

## Claims

1. Method for producing a boiled wort, this method including the stages consisting of:
- crushing grains to a predetermined granulometry without separation into several fractions and putting these grains in suspension in water;
- producing a saccharification of the grains in this suspension;
- bringing this suspension to the boil;
- filtering this suspension after boiling;
characterized in that malted or unmalted grains are used, and in that these grains are crushed so as to obtain a meal of which at least 30 to 40% constitutes a fraction in excess of 253 µm.

2. Method according to Claim 1, characterized in that the filtration is carried out over a thin bed of a thickness between 20 and 100 mm, preferably in the region of 40 mm.

3. Method according to Claim 1 or 2, characterized in that the hops are introduced in isomerized form during fermentation or during keeping.

4. Method according to one of Claims 1 to 3, characterized in that it includes an intermediate stage between boiling and filtration consisting of cooling to a temperature of about 70°C.

5. Method according to Claim 4, characterized in that the cooling of the intermediate stage is carried out by adding cold water.

6. Method according to Claim 4, characterized in that the cooling of the intermediate stage is carried out by passing through a heat exchanger.

7. Method according to any one of Claims 1 to 6, characterized in that hop oils are added during bottling or possibly before final clarification of the beer.

8. Method according to any one of Claims 1 to 7, characterized in that fine grist is used for the doughed-in malt so as to cut down the boiling time.

9. Method according to any one of Claims 1 to 8, characterized in that the dimethyl sulphide is eliminated by a stripping action when running off the wort into a buffer tank or by the use of an appropriate mobile stirring apparatus with raised pumping action in the saccharification/boiling vat.
